# EUROPÄISCHE PATENTSCHRIFT

(11) **EP 1 299 316 B1**
(45) Veröffentlichungstag und Bekanntmachung des Hinweises auf die Patenterteilung: **15.10.2003**
(21) Anmeldenummer: 01965091.0
(22) Anmeldetag: 09.07.2001
(51) Int. Cl.: C03B 19/09

(54) **VERFAHREN UND VORRICHTUNG ZUR HERSTELLUNG ROTATIONSSYMMETRISCHER QUARZGLASTIEGEL**
METHOD AND DEVICE FOR PRODUCING ROTATIONALLY SYMMETRICAL QUARTZ GLASS CRUCIBLES
PROCEDE ET DISPOSITIF DE FABRICATION DE CREUSETS EN VERRE DE QUARTZ A SYMETRIE DE REVOLUTION

(30) Priorität: 11.07.2000 DE 10033632
(43) Veröffentlichungstag der Anmeldung: 09.04.2003
(73) Patentinhaber: Heraeus Quarzglas GmbH & Co. KG, 63450 Hanau (DE)
(72) Erfinder: LEIST, Johann, 63674 Altenstadt (DE); GÖBEL, Rolf, 63571 Gelnhausen (DE); FRITZ, Helmut, 63633 Bierstein (DE)
(86) Internationale Anmeldenummer: EP0107858
(87) Internationale Veröffentlichungsnummer: WO02004368

(56) Entgegenhaltungen:
- EP-A- 0 911 429
- FR-A- 2 746 092

## Beschreibung

Die Erfindung betrifft ein Verfahren zur Herstellung rotationssymmetrischer Quarzglastiegel, bei dem ein Lichtbogen mittels einer Elektrodenanordnung, bestehend aus einer oder mehreren Anoden und einer Kathode, erzeugt und so eine Wandung oder ein Abschnitt einer Wandung des hierbei rotierenden Quarzglastiegels erhitzt wird. Weiterhin betrifft die Erfindung eine Vorrichtung zur Durchführung des Verfahrens.

Ein Verfahren und eine Vorrichtung der genannten Art werden in der Praxis aufgrund ihrer hohen Wirtschaftlichkeit vielfach eingesetzt. Eine in Rotation versetzte Schmelzform wird hierzu teilweise mit einer SiO₂-Körnung gefüllt, wobei dies eine natürliche oder synthetische SiO₂-Körnung sein kann. Mit Hilfe einer Schablone wird während der Rotation aus der Körnung eine Vorform des späteren Quarzglastiegels erstellt. Danach wird mittels der Elektrodenanordnung ein Lichtbogen gezündet und in verschiedenen Ebenen an der rotierenden Wandung des Quarzglastiegels entlanggeführt, wobei die Quarzglaskörnung zu einer glasigen Wand in Form des Quarzglastiegels geschmolzen wird. Nach dem Abkühlen des Quarzglastiegels ist dessen endgültige Form bereits geschaffen, wobei die Innenseite der Wandung glasiert ist, während an der Außenseite der Wandung noch SiO₂-Körnung anhaftet, die einem nachfolgenden Arbeitsschritt abgerieben oder abgeschliffen wird. Die Außenseite ist unglasiert.

Ein solches Verfahren ist auch Gegenstand der DE 197 10 672 A1, bei dem zusätzlich durch Einstreuen von SiO₂-Körnung mit weiteren Bestandteilen ein schichtartiger Aufbau mit speziellen Eigenschaften hergestellt wird.

Von grundsätzlicher Bedeutung für das Verfahren ist die Einhaltung einer insbesondere durch die geometrischen Abmessungen des Quarzglastiegels bestimmten Drehzahl der Schmelzform, weil die hierbei auftretenden Fliehkräfte die SiO₂-Körnung in der mittels Schablone vorgeformten Form halten. Dabei führt eine unzureichende Drehzahl mit entsprechend geringen Fliehkräften dazu, daß die lose SiO₂-Körnung nicht in der gewünschten Position gehalten werden kann und teilweise in der Schmelzform zu Boden rutscht. Im Gegensatz hierzu führt eine zu hohe Drehzahl dazu, daß die Bodenschicht des Quarzglastiegels nach außen verlagert wird und dabei aufreißt. Die Drehzahl ist demnach nur sehr eingeschränkt variabel.

Als nachteilig erweist sich dabei, daß eine ausreichend hohe und gleichmäßige Erhitzung der Wandung, insbesondere bei großen Quarzglastiegeln nur dadurch erreicht werden kann, daß die Elektrodenanordnung mit einer hohen Wärmeleistung betrieben wird. Dabei kann es jedoch beim Einstreuen von SiO₂-Körnung zu Verdampfungserscheinungen und Blasenbildung kommen, wodurch die Qualität des Endproduktes erheblich verschlechtert wird. Außerdem wird die Aufbaurate für die Innenschicht reduziert (Folge größere Verdampfungen). Weiterhin bedingt die partielle Erhitzung eines Abschnittes der rotierenden Wandung eine Abkühlphase entsprechend der Dauer einer vollen Umdrehung bis der Abschnitt der Wandung erneut in die Erhitzungszone eintritt, deren Dauer insbesondere bei geringen Drehzahlen und großen Durchmessern des Quarzglastiegels zu starken Temperaturschwankungen und damit zu Qualitätseinbußen führt.

Vor diesem Hintergrund liegt der Erfindung die Aufgabe zugrunde, ein Verfahren der Eingangs genannten Art derart weiterzubilden, daß unabhängig von der Drehzahl des rotierenden Quarzglastiegels die auftretende Temperaturdifferenz wesentlich vermindert werden kann, um so insbesondere unerwünschte Verdampfungen und Blasenbildungen durch starke Erhitzung bzw. Abkühlung weitgehend ausschließen zu können. Weiterhin soll eine Vorrichtung zur Durchführung des Verfahrens geschaffen werden.

Die erstgenannte Aufgabe wird erfindungsgemäß dadurch gelöst, daß durch zumindest eine weitere Elektrodenanordnung bestehend aus einer oder mehreren Anoden und einer Kathode ein weiterer Lichtbogen gebildet wird, wodurch ein weiterer Abschnitt der Wandung des Quarzglastiegels erwärmt wird. Hierdurch kann jede einzelne Elektrodenanordnung mit einer verminderten Wärmeleistung betrieben werden. Daher können Verdampfungserscheinungen, insbesondere beim Einstreuen der SiO₂-Körnung weitgehend ausgeschlossen werden. Zudem kann dadurch bei einer geometrisch vorbestimmten Drehzahl die Dauer der Abkühlungsphase, bis ein jeweiliger Abschnitt der Wandung erneut in eine nachfolgende Erhitzungszone der nächsten Elektrodenanordnung eintritt, deutlich verkürzt werden. Die auftretenden Temperaturdifferenzen werden somit erheblich verringert. Die Dicke einer durch das Einstreuen der SiO₂-Körnung erzeugten Innenschicht kann dabei zugleich erhöht werden, wobei zudem der bei höherer Wärmeleistung nach dem Stand der Technik verdampfende Anteil der SiO₂-Körnung zum Aufbau der Innenschicht mit einem größeren Anteil zur Verfügung steht. Dabei entfällt auch der zusätzliche Aufwand zum Absaugen der verdampfenden Bestandteile der SiO₂-Körnung, so daß eine weitgehende Automatisierung des Herstellungsverfahrens realisiert werden kann. Außerdem wird dabei auch die Dauer des Herstellungsverfahrens verkürzt, wodurch eine bessere Auslastung der Anlage und damit auch eine Steigerung der Wirtschaftlichkeit verbunden ist.

Hierbei wird eine besonders vorteilhafte Weiterbildung des Verfahrens dadurch erreicht, daß durch die Elektrodenanordnung verschiedene in Richtung der Rotationsachse des Quarzglastiegels voneinander entfernte Abschnitte erhitzt werden. Durch die hierzu in einer unterschiedlichen vertikalen Position vorgesehenen Elektrodenanordnungen kann ein großflächiger Wärmeeintrag und damit eine Verkürzung der Verfahrensdauer erreicht werden. Zugleich wird dabei eine gleichmäßigere Erwärmung des Quarzglastiegels mit einer entsprechend verbesserten Qualität erreicht.

Die zweite genannte Aufgabe, eine Vorrichtung zur Herstellung eines rotationssymmetrischen Quarzglastiegels durch abschnittsweise Erwärmung mittels einer zur Erzeugung eines Lichtbogens vorgesehenen Elektrodenanordnung, bestehend aus einer oder mehreren Anoden und einer Kathode, zu schaffen, wobei der Quarzglastiegel um seine Rotationsachse drehbar ist, wird erfindungsgemäß dadurch gelöst, daß die Vorrichtung zusätzlich zu der ersten Elektrodenanordnung mit zumindest einer weiteren Elektrodenanordnung, bestehend aus einer oder mehrerer Anoden und einer Kathode, ausgestattet ist, welche einem der ersten Elektrodenanordnung abgewandten Abschnitt des Quarzglastiegels zugeneigt ist. Hierdurch kann die Temperatur des Quarzglastiegels unabhängig von der Drehzahl auf einem vergleichsweise hohen Niveau gehalten werden, so daß die auftretenden Temperaturdifferenzen wesentlich geringer ausfallen. Dabei erreicht ein durch den Lichtbogen der ersten Elektrodenanordnung erhitzter Abschnitt der Oberfläche, insbesondere der Wandung oder der Bodenfläche, bereits nach einer geringen Drehwinkeländerung die Erhitzungszone des Lichtbogens der zweiten Elektrodenanordnung, wobei die einzelnen Elektrodenanordnungen mit einer verminderten Wärmeleistung betrieben werden können. Durch die damit verbundenen verminderten Verdampfungserscheinungen können einerseits zusätzliche Maßnahmen zum Absaugen der verdampften Bestandteile entfallen, andererseits erhöht sich der nutzbare Anteil der eingestreuten SiO₂-Körnung, so daß ein schneller Aufbau einer Innenschicht mit einer erheblich größeren Schichtdicke erreicht wird. Zudem entsteht eine im wesentlichen blasenfreie Innenschicht, wodurch höhere Qualitätsanforderungen problemlos realisierbar sind. Der Ausschußanteil des so geschaffenen Quarzglastiegels und die Dauer des Herstellungsverfahrens wird zugleich vermindert, so daß eine verbesserte Wirtschaftlichkeit des Herstellungsverfahrens gegeben ist. Weiterhin können dadurch auch wesentlich größere Tiegeldurchmesser hergestellt werden als dies nach dem Stand der Technik bisher möglich war.

Eine besonders vorteilhafte Ausführungsform der Erfindung ist dadurch gegeben, daß die Elektrodenanordnungen in verschiedenen, in Richtung der Rotationsachse des Quarzglastiegels voneinander beabstandeten Positionen angeordnet sind. Hierdurch kann eine großflächige Erwärmung beispielsweise über einenTeil oder die Gesamthöhe der Wandung des Quarzglastiegels erfolgen, um so eine gleichmäßige Erwärmung zu erreichen. Neben einer Qualitätssteigerung wird dabei auch die erforderliche Dauer des Herstellungsverfahrens, und dadurch der Herstellungsaufwand vermindert.

Dabei ist es auch besonders günstig, wenn die Elektrodenanordnungen voneinander unabhängig verfahrbar sind. Hierdurch kann eine optimale Anpassung an unterschiedliche Formen des Quarzglastiegels durch einen entsprechend abgestimmten Abstand zu der Wandung erfolgen. Daher kann die mit der Vorrichtung erreichbare Qualität weiter verbessert werden, wobei insbesondere auch aufwendige, von einer einfachen Topf- oder Zylinderform abweichende Formen eines Quarzglastiegels mit beispielsweise auch größeren Durchmessern ohne konstruktive Änderungen an der Vorrichtung herstellbar sind.

Hierzu ist eine Weiterbildung der Erfindung besonders gut geeignet, bei der die Elektrodenanordnungen bezüglich des Umfanges des Quarzglastiegels gleich verteilt angeordnet sind. Die durch die geometrischen Abmessungen einschließlich der daraus resultierenden Drehzahl des Quarzglastiegels bestimmte Abkühlungsdauer eines Abschnittes der Wandung zwischen zwei aufeinander folgenden Erhitzungszonen der verschiedenen Elektrodenanordnungen ist dadurch konstant, so daß eine unerwünschte Temperaturschwankung verhindert werden kann. Die so ausgestattete Vorrichtung führt dadurch zu einer weiteren Steigerung der Qualität.

Dabei ist eine andere vorteilhafte Abwandlung der Erfindung dadurch gegeben, daß zumindest eine Elektrodenanordnung mit einer Zuführung für SiO₂-Körnung versehen ist, während zumindest eine weitere Elektrodenanordnung ausschließlich zur Erhitzung vorgesehen ist. Hierdurch wird eine Vereinfachung der Vorrichtung und deren Steuerung erreicht, wobei eine Elektrodenanordnung ausschließlich zur Erhitzung eines Abschnittes der Wandung verwendet wird, während in den Lichtbogen einer weiteren Elektrodenanordnung zusätzlich SiO₂-Körnung eingestreut wird und so eine Innenschicht des Quarzglastiegels aufgebaut wird.

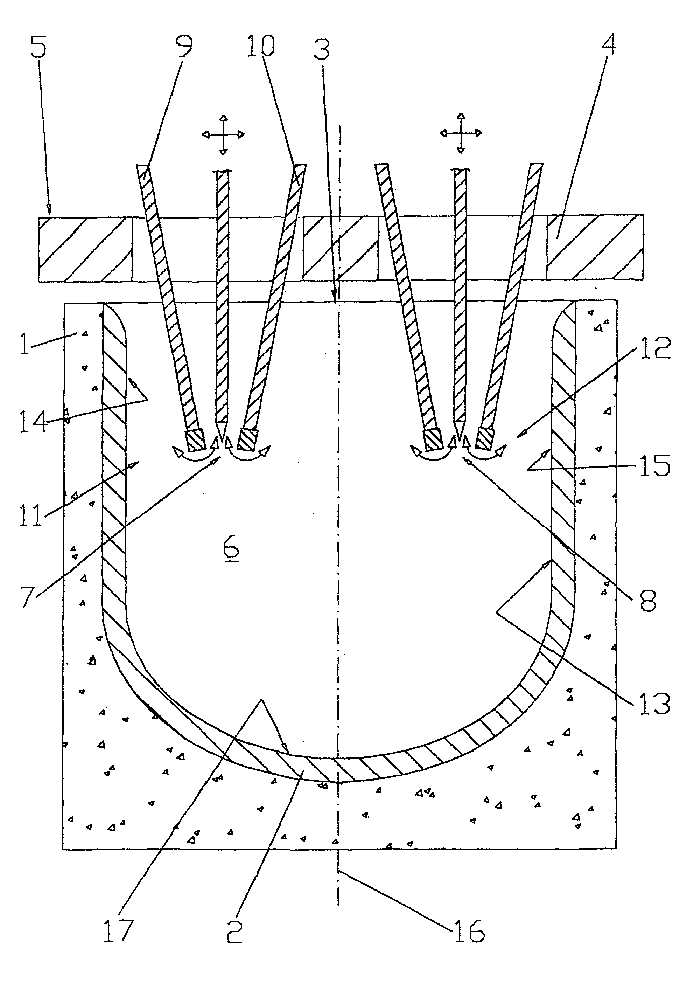

Die Erfindung läßt verschiedene Ausführungsformen zu. Zur weiteren Verdeutlichung ihres Grundprinzips ist eine davon in der Zeichnung dargestellt und wird nachfolgend beschrieben. Diese zeigt in einer seitlichen Schnittdarstellung eine Schmelzform 1 mit einem darin eingesetzten und als Tiegel ausgeführten Quarzglastiegel 2. Oberhalb einer Öffnung 3 des Quarzglastiegels 2 ist eine mit einem als Kühlplatte ausgeführten Kühlkörper 4 ausgestattete Vorrichtung 5 positioniert, durch die eine erste Elektrodenanordnung 7 und eine weitere Elektrodenanordnung 8 in einen Innenraum 6 des Quarzglastiegels 2 hineinragt. Diese jeweils mit einer oder mehreren Anoden 9 und einer Kathode 10 ausgestatteten Elektrodenanordnung 7, 8 bilden nach dem Zünden eines Lichtbogens jeweils eine Erhitzungszone 11, 12 im Bereich einer Wandung 13 des Quarzglastiegels 2. In diesen Erhitzungszonen 11, 12 wird jeweils ein Abschnitt 14, 15 der Wandung 13 erhitzt, wobei die Erhitzungsdauer eines jeweiligen Abschnittes 14, 15 durch die Drehzahl des hierbei um eine Rotationsachse 16 rotierenden Quarzglastiegels 2 bestimmt ist. Die Drehzahl ist ihrerseits insbesondere durch die Geometrie des Quarzglastiegels 2 weitgehend festgelegt, weil das zunächst ungebunden gegen die Schmelzform 1 anliegende und den späteren Quarzglastiegel 2 bildende SiO₂-Körnung ausschließlich durch die Fliehkraft bei der Rotation in einer durch eine Schablone vorgeformten Form gehalten wird. Dabei führt eine zu hohe Drehzahl des Quarzglastiegels 2 insbesondere im Bereich eines Bodens 17 des Quarzglastiegels 2 zu einer unerwünschten nach außen gerichteten Verlagerung der SiO₂-Körnung, während demgegenüber eine zu geringe Drehzahl zu einem Abgleiten der Körnung in der Schmelzform 1 nach unten führt. Durch die Verwendung von zwei Elektrodenanordnungen 7, 8 wird daher die Dauer der Abkühlphase eines Abschnittes 14, 15 zwischen den jeweils aufeinander folgenden Erhitzungszonen 11, 12 verkürzt und daher die Temperaturdifferenz der Wandung 13 verringert. Zugleich kann dabei die Wärmeleistung jeder einzelnen Elektrodenanordnung 7, 8 verringert werden, so daß auftretende Verdampfungen von Bestandteilen der eingestreuten SiO₂-Körnung in lediglich geringem Umfang auftreten und so ein weitgehend blasenfreies Endprodukt entsteht.

### Bezugszeichenliste

- 1: Schmelzform
- 2: Quarzg lastiegel
- 3: Öffnung
- 4: Kühlkörper
- 5: Vorrichtung
- 6: Innenraum
- 7: Elektrodenanordnung
- 8: Elektrodenanordnung
- 9: Anode
- 10: Kathode
- 11: Erhitzungszone
- 12: Erhitzungszone
- 13: Wandung
- 14: Abschnitt
- 15: Abschnitt
- 16: Rotationsachse
- 17: Boden

## Patentansprüche

1. Verfahren zur Herstellung rotationssymmetrischer Quarzglastiegel, bei dem ein Lichtbogen mittels einer Elektrodenanordnung, bestehend aus einer oder mehreren Anoden und einer Kathode, erzeugt und so eine Wandung oder ein Abschnitt einer Wandung des hierbei rotierenden Quarzglastiegels erhitzt wird, **dadurch gekennzeichnet, daß** durch zumindest eine weitere Elektrodenanordnung (8) bestehend aus einer oder mehreren Anoden (9) und einer Kathode (10) ein weiterer Lichtbogen gebildet wird, wodurch ein weiterer Abschnitt der Wandung des Quarzglastiegels (2) erwärmt wird.

2. Verfahren nach Anspruch 1, **dadurch gekennzeichnet, daß** durch die Elektrodenanordnung verschiedene in Richtung der Rotationsachse des Quarzglastiegels voneinander beabstandete Abschnitte erhitzt werden.

3. Vorrichtung zur Herstellung eines rotationssymmetrischen Quarzglastiegels durch abschnittsweise Erwärmung mittels einer zur Erzeugung eines Lichtbogens vorgesehenen Elektrodenanordnung, bestehend aus einer oder mehreren Anoden und einer Kathode, wobei der Quarzglastiegel um seine Rotationsachse drehbar ist, **dadurch gekennzeichnet, daß** die Vorrichtung (5) zusätzlich zu der ersten Elektrodenanordnung (7) mit zumindest einer weiteren Elektrodenanordnung (8), bestehend aus einer oder mehrerer Anoden (9) und einer Kathode (10), ausgestattet ist, welche einem der ersten Elektrodenanordnung (7) abgewandten Abschnitt (15) des Quarzglastiegels (2) zugeneigt ist.

4. Vorrichtung nach Anspruch 3, **dadurch gekennzeichnet, daß** die Elektrodenanordnungen (7, 8) in verschiedenen, in Richtung der Rotationsachse (16) des Quarzglastiegels (2) voneinander beabstandeten Positionen angeordnet sind.

5. Vorrichtung nach Anspruch 3 oder 4, **dadurch gekennzeichnet, daß** die Elektrodenanordnungen (7, 8) voneinander unabhängig verfahrbar sind.

6. Vorrichtung nach zumindest einem der Ansprüche 3 bis 5, **dadurch gekennzeichnet, daß** die Elektrodenanordnungen (7, 8) bezüglich des Umfanges des Quarzglastiegels (2) gleich verteilt angeordnet sind.

7. Vorrichtung nach zumindest einem der Ansprüche 3 bis 6, **dadurch gekennzeichnet, daß** zumindest eine Elektrodenanordnung (7, 8) mit einer Zuführung für SiO₂-Körnung versehen ist, während zumindest eine weitere Elektrodenanordnung (7, 8) ausschließlich zur Erhitzung vorgesehen ist.

## Claims

1. A method for producing rotationally symmetrical quartz glass crucibles by generating an electric arc by means of an arrangement of electrodes consisting of one or more anodes and one cathode and thus heating a wall or a wall section of the hereby rotating quartz glass crucible, **characterised in that** another electric arc is gegerated by at least one further arrangement of electrodes (8) consisting of one or more anodes (9) and one cathode (10) by means of which a further wall section of the quartz glass crucible (2) is heated.

2. A method as claimed in claim 1, **characterised in that** different sections having a distance from each other in the direction of the rotational axis of the quartz glass crucible are heated by the electrodes.

3. A device for producing a rotationally symmetrical quartz glass crucible by sectional heating by means of an electrode arrangement provided for the generation of an electric arc consisting of one or more anodes and one cathode, whereby the quartz glass crucible is rotatable along its rotational axis, **characterised in that** apart from the first electrode arrangement (7) the device (5) is aditionally provided with at least one further electrode arrangement (8) consisting of one or more anodes (9) and one cathode (10) which is inclined towards a section (15) of the quartz glass crucible (2) opposite to the first electrode arrangement (7).

4. A device as claimed in claim 3, **characterised in that** the electrode arrangements (7, 8) are arranged in different positions having a distance from each other in the direction of the rotational axis (16) of the quartz glass crucible (2).

5. A device as claimed in claim 3 or 4, **characterised in that** the electrode arrangements (7, 8) can be shifted independently from each other.

6. A device as claimed in at least one of claims 3 to 5, **characterised in that** the electrode arrangements (7, 8) are uniformly distributed in relation to the circumference of the quartz glass crucible (2).

7. A device as claimed in at least one of claims 3 to 6, **characterised in that** at least one electrode arrangement (7, 8) is provided with a supply for SiO₂ grains while at least one further electrode arrangement (7, 8) is provided exclusively for heating.

## Revendications

1. Procédé de fabrication de creuset en verre de quartz symétrique en rotation, dans lequel un arc est produit au moyen d'un dispositif d'électrode, se composant d'une ou de plusieurs anodes et d'une cathode, et ainsi une paroi ou une section de cette paroi du creuset en verre de quartz tournant est chauffée, **caractérisé en ce qu'**un autre arc est formé par au moins un autre dispositif d'électrode (8) se composant d'une ou de plusieurs anodes (9) et d'une cathode (10), ce qui chauffe une autre section de la paroi du creuset en verre de quartz (2).

2. Procédé selon la revendication 1, **caractérisé en ce que** différentes sections séparées à distance dans le sens de l'axe de rotation du creuset en verre de quartz sont chauffées par le dispositif d'électrode.

3. Procédé de fabrication de creuset en verre de quartz symétrique en rotation par chauffage par section au moyen d'un dispositif d'électrodes prévu pour la génération d'un arc, se composant d'une ou de plusieurs anodes et d'une cathode, le creuset en verre de quartz étant rotatif autour de son axe de rotation,
**caractérisé en ce que** le dispositif (5) en plus du premier dispositif d'électrodes (7) est muni au moins d'un autre dispositif d'électrodes (8) se composant d'une ou de plusieurs anodes (9) et d'une cathode (10), qui est tourné en direction d'une section (15) du creuset en verre de quartz (2), section détournée du premier dispositif d'électrode (7).

4. Dispositif selon la revendication 3, **caractérisé en ce que** les dispositifs d'électrodes (7, 8) sont disposés dans différentes positions à distance les unes des autres en direction de l'axe de rotation (16) du creuset de verre de quartz (2).

5. Dispositif selon la revendication 3 ou 4,
**caractérisé en ce que** les dispositifs d'électrodes (7, 8) sont mobiles indépendamment les uns des autres.

6. Dispositif selon au moins l'une des revendications 3 à 5, **caractérisé en ce que** les dispositifs d'électrodes (7, 8) sont disposés de manière identique par rapport à la périphérie du creuset en verre de quartz (2).

7. Dispositif selon au moins l'une des revendications 3 à 6, **caractérisé en ce qu'**au moins un dispositif d'électrode (7, 8) est muni d'une ligne d'amenée pour les granulés de SiO₂ tandis qu'au moins un autre dispositif d'électrode (7, 8) est prévu exclusivement pour le chauffage.
